# EUROPEAN PATENT APPLICATION

(11) **EP 4 763 549 A1**
(43) Date of publication of application: **24.06.2026**
(21) Application number: 25221665.0
(22) Date of filing: 09.12.2025
(51) Int. Cl.: B60H 1/00, B60L 3/00

(54) **VEHICLE AND CONTROL METHOD**

(30) Priority: 23.12.2024 JP 2024225985; 08.05.2025 JP 2025078125
(71) Applicant: Toyota Jidosha Kabushiki Kaisha, Toyota-shi, Aichi-ken 471-8571 (JP)
(72) Inventor: TOMITA, Shintaro, Toyota-shi, 471-8571 (JP); ISHISHITA, Teruo, Toyota-shi, 471-8571 (JP); KAMESAKI, Daisuke, Toyota-shi, 471-8571 (JP)
(74) Representative: D Young & Co LLP

(57) **Abstract**

An electrically powered vehicle (100) includes a vehicle body, a battery module (50), a hydrogen sulfide sensor (70), an air conditioner (170), and an ECU (150). When the hydrogen sulfide sensor (70) detects generation of a gas or detects that the generation of the gas is predicted in an inside air mode, the ECU (150) performs a restriction mode of restricting an amount of airflow from the air conditioner (170).

## Description

### CROSS REFERENCE TO RELATED APPLICATIONS

This nonprovisional application is based on Japanese Patent Application No. 2024-225985 filed on December 23, 2024 and Japanese Patent Application No. 2025-078125 filed on May 8, 2025, with the Japan Patent Office, the entire contents of which are hereby incorporated by reference.

### BACKGROUND

### Field

The present disclosure relates to a vehicle and a method for controlling a vehicle.

### Description of the Background Art

Japanese Patent Laying-Open No. 2024-127556 discloses that, in a vehicle on which an all-solid-state battery housed in a case is mounted, a blocking process is performed to separate the inside of a vehicle compartment from outside air when a gas is generated in the case. As an exemplary blocking process, Japanese Patent Laying-Open No. 2024-127556 discloses a process of switching an air circulation path to an inside air circulation path by an air conditioner.

### SUMMARY

However, if the switching to the inside air circulation path is made suddenly during operation of the air conditioner, the generated gas may enter the vehicle compartment due to a difference in air pressure.

One of the causes for the difference in air pressure may be that, when a fan disposed in the air conditioner has a high rotational speed in an inside air mode of circulating air in the vehicle compartment, a large amount of air flows into the vehicle compartment, causing a negative pressure to be generated before the fan in an inside air circulation flow path. As a result, a valve that blocks the outside air may form a gap, and the generated gas may flow in through the gap formed by the valve that blocks the outside air.

The present disclosure has been made to solve the above-described problem, and an object of the present disclosure is to provide a vehicle and a control method capable of suppressing entry of a gas generated from a power storage device into a vehicle compartment.

A vehicle according to a first aspect of the present disclosure includes: a vehicle body; a power storage device mounted on the vehicle body; a detection device that detects generation of a gas from the power storage device; an air conditioner that adjusts an amount of airflow in a vehicle compartment, and switches an operation mode between an inside air mode of circulating air in the vehicle compartment and an outside air mode of taking outside air into the vehicle compartment; and a controller. When the detection device detects the generation of the gas, the controller is configured to switch the operation mode to the inside air mode, after setting an amount of airflow from the air conditioner to be equal to or lower than a specified value or after stopping the airflow.

A vehicle according to a second aspect of the present disclosure includes: a vehicle body; a power storage device mounted on the vehicle body; a detection device that detects generation of a gas from the power storage device or detects that the generation of the gas is predicted; an air conditioner that adjusts an amount of airflow in a vehicle compartment, and switches an operation mode between an inside air mode of circulating air in the vehicle compartment and an outside air mode of taking outside air into the vehicle compartment; and a controller. When the detection device detects the generation of the gas or detects that the generation of the gas is predicted in the inside air mode, the controller is configured to perform a restriction mode of restricting an amount of airflow from the air conditioner.

A vehicle according to a third aspect of the present disclosure includes: a vehicle body; a power storage device mounted on the vehicle body; a detection device that detects generation of a gas from the power storage device or detects that the generation of the gas is predicted; an air conditioner that adjusts an amount of airflow in a vehicle compartment, and switches an operation mode between an inside air mode of circulating air in the vehicle compartment and an outside air mode of taking outside air into the vehicle compartment; a notification device that notifies a user of information about the vehicle; and a controller. When the detection device detects the generation of the gas or detects that the generation of the gas is predicted in the inside air mode, the controller is configured to control the notification device to notify the user that an amount of airflow from the air conditioner is to be set to be equal to or lower than a specified value.

A vehicle according to a fourth aspect of the present disclosure includes: a vehicle body; a power storage device mounted on the vehicle body; an air conditioner that adjusts an amount of airflow in a vehicle compartment, and switches an operation mode between an inside air mode of circulating air in the vehicle compartment and an outside air mode of taking outside air into the vehicle compartment; and a controller. When a gas is generated from the power storage device or when the generation of the gas is predicted in the inside air mode, the controller is configured to reduce an amount of airflow from the air conditioner.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 shows a configuration of an electrically powered vehicle according to an embodiment.
Fig. 2 is a perspective view showing a configuration of a battery case according to an embodiment.
Fig. 3 is a cross-sectional view taken along line III-III in Fig. 2.
Fig. 4 shows a configuration of an air conditioner according to an embodiment.
Fig. 5 shows an exemplary setting of the air conditioner.
Fig. 6 is a flowchart showing an exemplary process performed by an ECU.
Fig. 7 shows a state of the air conditioner before an amount of airflow is changed.
Fig. 8 shows a state of the air conditioner after the amount of airflow is changed.
Fig. 9 is a flowchart showing an exemplary process performed by the ECU.
Fig. 10 is a flowchart showing an exemplary notification process performed by the ECU.
Fig. 11 is a flowchart showing an exemplary restriction mode performed by the ECU.
Fig. 12 is a flowchart showing an exemplary restriction mode performed by the ECU.
Fig. 13 is a flowchart showing an exemplary restriction mode performed by the ECU.

### DESCRIPTION OF THE PREFERRED EMBODIMENTS

Embodiments of the present disclosure will be hereinafter described in detail with reference to the drawings. In the drawings, the same or corresponding parts are denoted by the same reference characters, and description thereof will not be repeated.

### (First Embodiment)

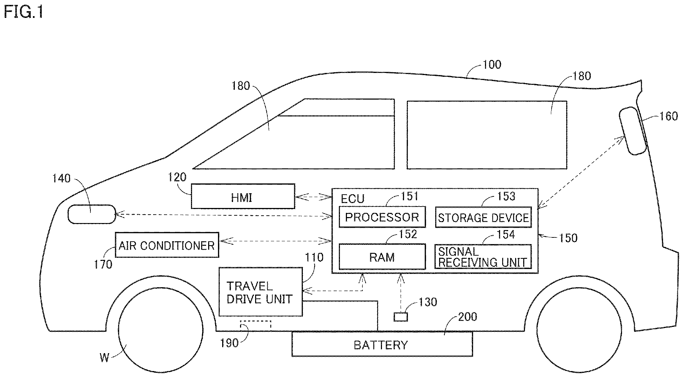

Fig. 1 schematically shows an overall configuration of an electrically powered vehicle 100 on which a battery system is mounted according to the present embodiment. Electrically powered vehicle 100 includes a battery 200 that stores electric power for traveling. Electrically powered vehicle 100 is configured to be capable of traveling with electric power stored in battery 200. Although electrically powered vehicle 100 is a battery electric vehicle (BEV) without an engine (internal combustion engine) in the present embodiment, electrically powered vehicle 100 may be a hybrid electric vehicle (HEV) or a plug-in hybrid electric vehicle (PHEV) with an engine. Note that electrically powered vehicle 100 is an example of "vehicle" of the present disclosure.

Electrically powered vehicle 100 includes a controller (ECU: Electronic Control Unit) 150. ECU 150 is configured to perform charging control and discharging control for battery 200. ECU 150 includes a processor 151, a RAM (Random Access Memory) 152, a storage device 153, and a signal receiving unit 154. Note that ECU 150 is an example of "controller" of the present disclosure.

ECU 150 may be a computer. Processor 151 may be a CPU (Central Processing Unit). RAM 152 functions as a working memory that temporarily stores data to be processed by processor 151.

Storage device 153 is configured to be capable of storing stored information. Storage device 153 stores a program as well as information (for example, maps, mathematical expressions, and various parameters) to be used for the program. When processor 151 executes the program stored in storage device 153, various types of control in ECU 150 are performed.

Signal receiving unit 154 receives a predetermined signal from another device of ECU 150. For example, signal receiving unit 154 receives, from a hydrogen sulfide sensor 70 described later, information (signal) indicating that hydrogen sulfide has been generated in a battery case 90.

A monitoring module 130 includes various sensors that detect a state (for example, voltage, current, and temperature) of battery 200, and outputs a result of detection to ECU 150. Monitoring module 130 may be a BMS (Battery Management System) having an SOC (State Of Charge) estimating function, an SOH (State Of Health) estimating function, a cell voltage equalizing function, a diagnostic function, and a communication function, in addition to the functions of the sensors described above. ECU 150 can obtain the state (for example, temperature, current, voltage, SOC, and internal resistance) of battery 200 based on the output from monitoring module 130. Note that battery 200 is charged (externally charged) with electric power supplied from a charging facility.

Electrically powered vehicle 100 further includes a travel drive unit 110, an HMI (Human Machine Interface) device 120, a hazard lamp 140, an external display 160, an air conditioner 170, a plurality of windows 180, an exhaust unit 190, and a drive wheel W.

Travel drive unit 110 includes a PCU (Power Control Unit) and an MG (Motor Generator) (not shown), and is configured to cause electrically powered vehicle 100 to travel with electric power stored in battery 200. The PCU includes, for example, an inverter, a converter, and a relay (hereinafter referred to as "SMR (System Main Relay)"). The PCU is controlled by ECU 150.

The MG is, for example, a three-phase AC motor generator. The MG is driven by the PCU, and is configured to rotate drive wheel W. The PCU drives the MG with electric power supplied from battery 200. The MG is configured to perform regenerative power generation and supply the generated power to battery 200. The SMR is configured to switch between connection and disconnection of a power path from battery 200 to the PCU. The SMR is set to a closed state (connected state) during travel of electrically powered vehicle 100.

HMI device 120 includes an input device and a display device. HMI device 120 may include a touch panel display. HMI device 120 is an example of "notification device" that notifies a user of information about electrically powered vehicle 100.

Hazard lamp 140 is a lamp disposed at each of the front, rear, right, and left sides of electrically powered vehicle 100. Hazard lamp 140 is the same lamp as a direction indicator, and functions as an emergency flashing indicator light. External display 160 is, for example, an LED display. External display 160 is provided on a rear window, and allows display contents to be viewed from outside electrically powered vehicle 100. Note that hazard lamp 140 or external display 160 may function as the "notification device" that notifies the user of information about electrically powered vehicle 100.

Air conditioner 170 is a device that adjusts a room temperature in a vehicle compartment. Air conditioner 170 is controlled by ECU 150. Air conditioner 170 will be described in detail later. The plurality of windows 180 are openable and closable windows that shield the inside of the vehicle compartment from outside air. Windows 180 may include, for example, a side window and a not shown sunroof of electrically powered vehicle 100. The opening and closing of the plurality of windows 180 is controlled by ECU 150.

Exhaust unit 190 is configured to exhaust air from inside the vehicle compartment to outside electrically powered vehicle 100. For example, exhaust unit 190 is configured to be capable of being opened and closed by ECU 150, and exhausts the air from inside the vehicle compartment when in an opened state. As shown in Fig. 1, exhaust unit 190 is provided at the bottom within the vehicle compartment. Although Fig. 1 shows only one exhaust unit 190, a plurality of exhaust units 190 may be provided. For example, exhaust unit 190 may be provided on each of the front and rear sides within the vehicle compartment.

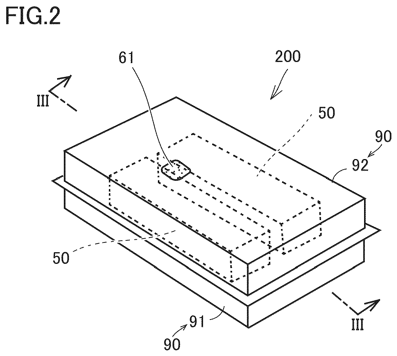

Fig. 2 is a perspective view of battery 200. Battery 200 includes battery case 90 and a battery module 50 housed in battery case 90. Note that battery module 50 is an example of "power storage device."

Battery case 90 includes a lower case 91 and an upper case 92. In the present embodiment, two battery modules 50 are contained in the space formed by lower case 91 and upper case 92. Upper case 92 is provided with a breathable membrane 61. Breathable membrane 61 will be described later. Battery 200 is mounted outside the vehicle compartment of electrically powered vehicle 100. Battery 200 may be mounted inside the vehicle compartment of electrically powered vehicle 100, or may be mounted on the floor of electrically powered vehicle 100.

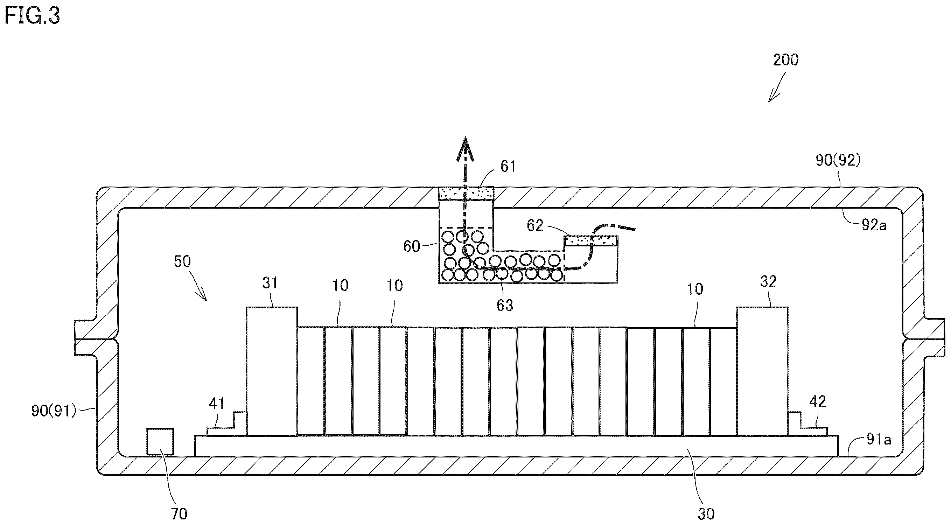

Fig. 3 shows a schematic configuration of battery 200. Fig. 3 is a cross section taken along line III-III in Fig. 2. Battery module 50 is a battery assembly in which a plurality of cells 10 are connected together. The plurality of cells 10 are sulfide-based all-solid-state cells. The plurality of cells 10 are disposed and stacked between end plates 31 and 32 that constitute a pair. In the plurality of cells 10, a sulfur component contained in the plurality of cells 10 may react with moisture in the air to generate hydrogen sulfide, which may be released into battery case 90. Note that the hydrogen sulfide is an example of "gas" of the present disclosure.

The plurality of cells 10 in the state of being stacked are placed between end plates 31 and 32 of the pair, and a predetermined restraint load is applied to the cells by a not shown restraint band or the like. End plates 31 and 32 of the pair are fixed to a bottom plate 30 by brackets 41 and 42, respectively. Battery module 50 including the plurality of cells 10 stacked between end plates 31 and 32 of the pair, bottom plate 30, and the like is fixed to a bottom surface 91a of lower case 91. Battery case 90 is a housing that houses battery module 50.

Upper case 92 is provided with a duct 60. Duct 60 is a communication passage through which the inside and outside of battery case 90 are in communication with each other, and allows air to be exhausted from inside battery case 90 to outside when an internal pressure of battery case 90 increases, and allows external air (outside air) to be taken in when the internal pressure of battery case 90 decreases. Duct 60 is attached to an opening formed in a ceiling surface 92a of upper case 92.

Breathable membranes 61 and 62 each formed from an air-permeable and waterproof (moisture-permeable and waterproof) sheet are provided at end portions of duct 60. The air-permeable and waterproof (moisture-permeable and waterproof) sheet may be, for example, GORE-TEX^{®}. A desulfurizing agent 63 is disposed inside duct 60. Desulfurizing agent 63 may be, for example, a desulfurizing agent in the form of pellets containing iron oxide as a main component, and chemically adsorbs hydrogen sulfide. When the internal pressure of battery case 90 increases, the air is exhausted from inside battery case 90 to outside through duct 60 as indicated by a dashed-and-dotted line arrow. At this time, hydrogen sulfide contained in the air is chemically adsorbed by desulfurizing agent 63, and the hydrogen sulfide is removed. As described above, duct 60 has the function of a desulfurizing unit.

Hydrogen sulfide sensor 70 is disposed inside battery case 90. Hydrogen sulfide sensor 70 is a sensor that detects a concentration of hydrogen sulfide (H₂S) contained in the atmosphere, and outputs a signal indicating a result of detection to ECU 150 (signal receiving unit 154). Hydrogen sulfide sensor 70 may be, for example, a hot wire type semiconductor sensor or a constant potential electrolytic sensor. In the present embodiment, one hydrogen sulfide sensor 70 is provided on bottom surface 91a of lower case 91 around battery module 50. Hydrogen sulfide sensor 70 is an example of "detection device." Note that the position and the number of hydrogen sulfide sensor(s) 70 are not limited to those in the above example.

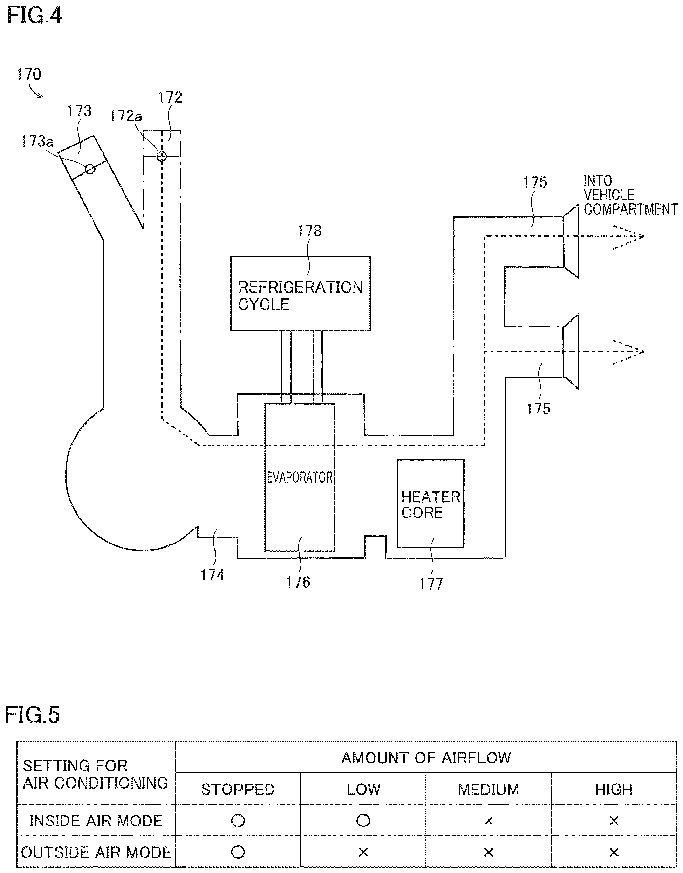

Fig. 4 shows a detailed configuration of air conditioner 170. Air conditioner 170 includes an inside air intake unit 172, an outside air intake unit 173, a duct 174, an exhaust unit 175, an evaporator 176, a heater core 177, and a refrigeration cycle 178. An exemplary flow of air is indicated by a dashed-and-dotted line in Fig. 4.

Inside air intake unit 172 is an inlet for circulation of inside air, which draws in air in the vehicle compartment and introduces it into duct 174. Inside air intake unit 172 is provided with an electromagnetic valve 172a for controlling conduction of inside air intake unit 172. The opening and closing of electromagnetic valve 172a is controlled by ECU 150.

Outside air intake unit 173 is an inlet for circulation of outside air, which draws in outside air and introduces it into duct 174. Outside air intake unit 173 is provided with an electromagnetic valve 173a for controlling conduction of outside air intake unit 173. The opening and closing of electromagnetic valve 173a is controlled by ECU 150. Exhaust unit 175 exhausts the air that has flowed through duct 174 into the vehicle compartment.

Each of evaporator 176 and heater core 177 is provided in duct 174. Evaporator 176 cools the air flowing through duct 174. Heater core 177 raises the temperature of the air flowing through duct 174. Evaporator 176 is connected to refrigeration cycle 178.

ECU 150 controls which of inside air intake unit 172 and outside air intake unit 173 introduces the air into duct 174. Specifically, ECU 150 controls an air circulation path by controlling the opening and closing of each of electromagnetic valve 172a and electromagnetic valve 173a.

A mode that employs an air circulation path through which the air is introduced from inside air intake unit 172 into duct 174 to circulate the air in the vehicle compartment is an example of "inside air mode" of the present disclosure. A mode that employs an air circulation path through which the air is introduced from outside air intake unit 173 into duct 174 to take the outside air into the vehicle compartment is an example of "outside air mode" of the present disclosure. ECU 150 switches an operation mode between the inside air mode and the outside air mode by controlling air conditioner 170.

Air conditioner 170 can adjust an amount of airflow in the vehicle compartment by changing a rotational speed of a not shown fan. ECU 150 adjusts the amount of airflow in the vehicle compartment by controlling the fan provided in air conditioner 170.

Here, hydrogen sulfide generated in battery case 90 is adsorbed by desulfurizing agent 63 in duct 60, but may be partially discharged to the outside air through breathable membrane 61. It is therefore desired to suppress entry of the hydrogen sulfide discharged to the outside air into the vehicle compartment.

In electrically powered vehicle 100 of the present embodiment, therefore, when hydrogen sulfide is generated from battery 200 in battery case 90, ECU 150 suppresses the entry of the generated gas into the vehicle compartment by controlling air conditioner 170.

The setting of air conditioner 170 is described. Fig. 5 shows an exemplary setting of air conditioner 170. As shown in Fig. 5, the setting of air conditioner 170 allows adjustment of the amount of airflow in the vehicle compartment, and switching of the operation mode between the inside air mode of circulating the air in the compartment and the outside air mode of taking the outside air into the vehicle compartment.

For example, the amount of airflow can be adjusted to a plurality of levels of STOPPED, LOW, MEDIUM, and HIGH. The STOPPED indicates that the amount of airflow is zero. A range is set for each of the LOW, MEDIUM, and HIGH, and each range may be further adjustable to a plurality of levels. Circles and crosses in Fig. 5 indicate whether there is a possibility of hydrogen sulfide entering the vehicle compartment within five minutes after the hydrogen sulfide is detected. A circle indicates that there is no possibility of the hydrogen sulfide entering the vehicle compartment, whereas a cross indicates that there is a possibility of the hydrogen sulfide entering the vehicle compartment.

As shown in Fig. 5, when the amount of airflow is equal to or lower than the LOW which is a specified value or is STOPPED in the inside air mode, the hydrogen sulfide does not enter the vehicle compartment. When the amount of airflow exceeds the LOW which is the specified value (the amount of airflow is MEDIUM or HIGH) in the inside air mode, on the other hand, there is a possibility of the hydrogen sulfide entering the vehicle compartment. When the amount of airflow is STOPPED in the outside air mode, there is no possibility of the hydrogen sulfide entering the vehicle compartment. When the amount of airflow is LOW, MEDIUM, or HIGH in the outside air mode, on the other hand, there is a possibility of the hydrogen sulfide entering the vehicle compartment.

When the generation of hydrogen sulfide is detected, therefore, it is desired to set the amount of airflow to be equal to or lower than the LOW or to the STOPPED in the inside air mode, and to set the amount of airflow to the STOPPED in the outside air mode. Note that in the outside air mode, even if the amount of airflow is STOPPED, there is a possibility of the hydrogen sulfide entering duct 174 because electromagnetic valve 173a for controlling the conduction of outside air intake unit 173 is in an opened state. When the generation of hydrogen sulfide is detected, therefore, it is desired to set the operation mode to the inside air mode instead of the outside air mode.

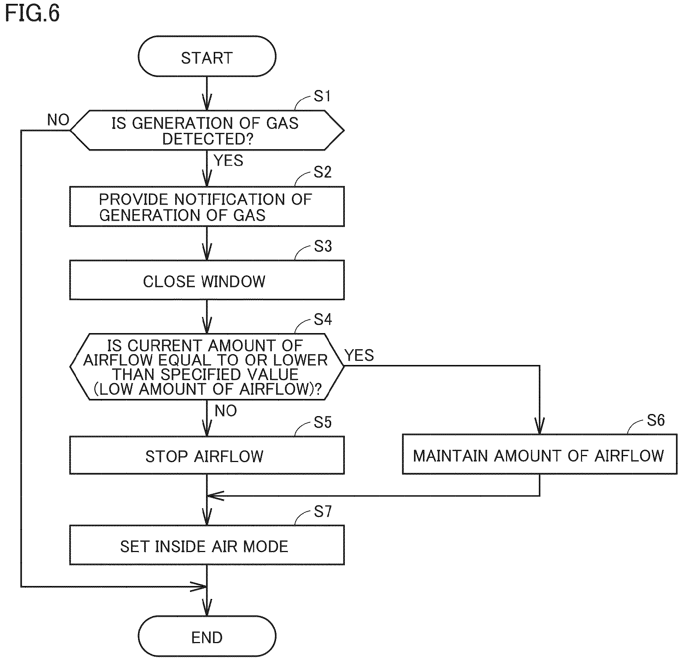

Next, a method for controlling electrically powered vehicle 100 is described. Fig. 6 is a flowchart showing an exemplary process performed by ECU 150. A series of steps shown in this flowchart is repeatedly performed at predetermined intervals.

In step (step is hereinafter abbreviated as S) 1, ECU 150 detects generation of a gas on the condition that a detected value from hydrogen sulfide sensor 70 is greater than a predetermined threshold value. When the generation of the gas is not detected in S1 (NO in S1), ECU 150 ends the process.

When the generation of the gas is detected in S1 (YES in S1), ECU 150 notifies the user of electrically powered vehicle 100 of the generation of the gas (that the detected value of hydrogen sulfide has exceeded the threshold value) (S2). For example, ECU 150 causes HMI device 120 of electrically powered vehicle 100 to display a message indicating that the detected value of hydrogen sulfide is high. Alternatively, ECU 150 may provide a notification to the user by lighting a lamp, by sound, or the like.

Then, ECU 150 performs a step of closing at least one window (S3). For example, ECU 150 closes all of the plurality of windows 180. Specifically, ECU 150 outputs a signal for closing windows 180 to a not shown drive unit that drives windows 180.

Then, ECU 150 determines whether or not a current amount of airflow is equal to or lower than the specified value (LOW amount of airflow) (S4). For example, ECU 150 determines the current amount of airflow based on a signal from the not shown fan. When it is determined that the current amount of airflow exceeds the specified value (the amount of airflow is MEDIUM or HIGH) (NO in S4), ECU 150 stops the airflow (S5). Note that S5 is not limited to the stopping of the airflow, but may be control of reducing the amount of airflow to be equal to or lower than the specified value.

When it is determined that the current amount of airflow is equal to or lower than the specified value (LOW amount of airflow) in S4 (YES in S4), ECU 150 maintains the current amount of airflow (S6). After S5 or S6, ECU 150 sets the inside air mode for air conditioner 170 (S7), and ends the process.

In the case described above, the current amount of airflow is maintained in S6 of Fig. 6 when it is determined that the current amount of airflow is equal to or lower than the specified value (LOW amount of airflow) (YES in S4). However, the airflow may be stopped as shown in S5 regardless of whether or not the current amount of airflow is equal to or lower than the specified value.

As described above, in the present embodiment, when hydrogen sulfide sensor 70 detects the generation of the gas, ECU 150 switches the operation mode to the inside air mode (S7), after setting the amount of airflow from air conditioner 170 to be equal to or lower than the specified value (LOW amount of airflow) (S6) or after stopping the airflow (S5). Thus, electrically powered vehicle 100 can suppress the entry of the gas, which has been generated by the difference in air pressure during switching of the circulation path in air conditioner 170 due to the amount of airflow exceeding the specified value, into the vehicle compartment.

In the embodiment described above, when hydrogen sulfide sensor 70 detects the generation of the gas, ECU 150 determines the current amount of airflow from air conditioner 170 (S4), sets the amount of airflow from air conditioner 170 to be equal to or lower than the specified value when the determined amount of airflow is higher than the specified value (LOW amount of airflow) (S6), and maintains the current amount of airflow when the determined amount of airflow is equal to or lower than the specified value (S6). Thus, electrically powered vehicle 100 can suppress the entry of the gas, which has been generated by the difference in air pressure during switching of the circulation path in air conditioner 170 due to the amount of airflow exceeding the specified value, into the vehicle compartment.

In the embodiment described above, electrically powered vehicle 100 includes the plurality of windows 180 that are openable and closable and shield the inside of the vehicle compartment from outside air. ECU 150 controls the opening and closing of the plurality of windows 180. When hydrogen sulfide sensor 70 detects the generation of the gas, ECU 150 closes the plurality of windows 180 (S3). Thus, electrically powered vehicle 100 can suppress the entry of the gas into the vehicle compartment. Note that ECU 150 may close only some of the plurality of windows 180. ECU 150 may close windows 180 to such an extent that a small gap is formed, instead of completely closing windows 180.

In the embodiment described above, electrically powered vehicle 100 includes HMI device 120 that notifies the user of information about electrically powered vehicle 100. When hydrogen sulfide sensor 70 detects the generation of the gas, ECU 150 provides a notification of the generation of the gas by HMI device 120 (S2). Thus, electrically powered vehicle 100 can readily notify the user of the generation of the gas.

The present disclosure relates to a control method for controlling electrically powered vehicle 100 in which battery module 50 is mounted on a vehicle body. The control method includes, when hydrogen sulfide sensor 70 detects the generation of the gas, setting the amount of airflow from air conditioner 170 to be equal to or lower than the specified value (LOW amount of airflow) (S6) or stopping the airflow (S5), and switching the operation mode to the inside air mode (S7) after the setting the amount of airflow or the stopping the airflow. Thus, the control method of the present embodiment can suppress the entry of the gas, which has been generated by the difference in air pressure during switching of the circulation path in air conditioner 170 due to the amount of airflow exceeding the specified value, into the vehicle compartment.

Here, when an internal short circuit occurs in cell 10, the amount of current increases and the temperature rises in cell 10. Electrically powered vehicle 100 may detect generation of hydrogen sulfide by detecting the rise in temperature of cell 10 through a temperature sensor or the like.

When hydrogen sulfide is generated in cell 10, there are locations where the pressure changes. Electrically powered vehicle 100 may detect generation of hydrogen sulfide based on an increase in a detected value from a pressure sensor, by disposing the pressure sensor at a location where the pressure changes.

### (Second Embodiment)

In the case described in the first embodiment, there are provided two electromagnetic valves, namely, electromagnetic valve 172a for controlling the conduction of inside air intake unit 172 and electromagnetic valve 173a for controlling the conduction of outside air intake unit 173. A second embodiment describes a configuration in which the conduction of inside air intake unit 172 and outside air intake unit 173 is controlled by one electromagnetic valve 179. ECU 150 performs control such that electromagnetic valve 179 blocks a passage of outside air intake unit 173 in the inside air mode, and electromagnetic valve 179 blocks a passage of inside air intake unit 172 in the outside air mode.

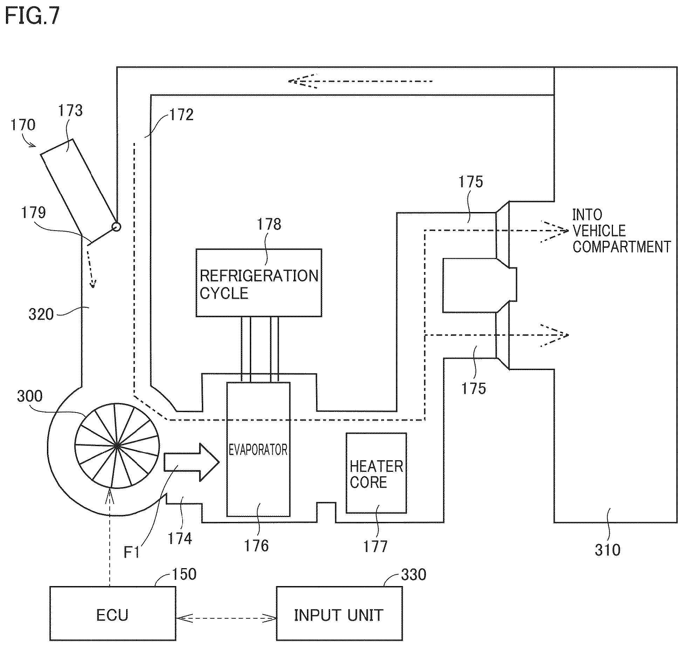

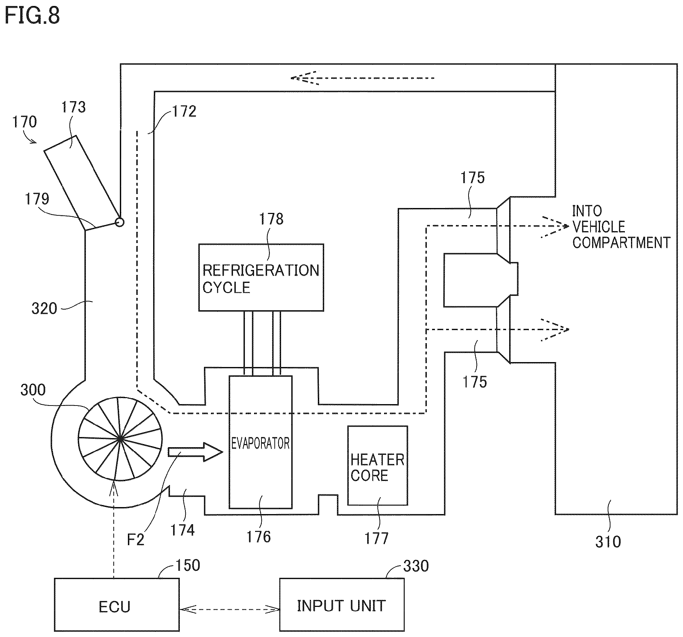

Fig. 7 shows a state of air conditioner 170 before the amount of airflow is changed. Fig. 8 shows a state of air conditioner 170 after the amount of airflow is changed. As shown in Figs. 7 and 8, in the second embodiment, one electromagnetic valve 179 is provided at a branch position between inside air intake unit 172 and outside air intake unit 173. Additionally, in the second embodiment, a fan 300 not shown in the first embodiment is shown inside air conditioner 170. Additionally, in the second embodiment, a vehicle compartment 310 not shown in the first embodiment is shown. Here, vehicle compartment 310 and an air conditioning space 320 are formed in the vehicle. Air conditioning space 320 is a space defined within air conditioner 170, and includes inside air intake unit 172, outside air intake unit 173, duct 174, exhaust unit 175, and the like. ECU 150 adjusts the amount of air flowing into vehicle compartment 310 from air conditioning space 320 by controlling the rotational speed of fan 300.

ECU 150 receives a signal from an input unit 330. Input unit 330 has a function that, when operated by the user, allows the user to adjust the amount of airflow from air conditioner 170. Input unit 330 includes, for example, HMI device 120 including a touch panel display. Input unit 330 may be a part of air conditioner 170, or may be an operation unit that allows the user to change the amount of airflow from air conditioner 170, for example. Input unit 330 may be a mobile terminal such as a tablet or a smartphone owned by the user.

The amount of airflow from air conditioner 170 is adjusted based on, for example, a map of an amount of airflow corresponding to the difference between a set temperature and an outside air temperature. Such a map is stored in storage device 153. For example, the map specifies that the amount of airflow is to be increased when the difference between the set temperature and the outside air temperature is large, and that the amount of airflow is to be reduced when the difference between the set temperature and the outside air temperature is small. The amount of airflow may be changed using a corresponding map, or using a value obtained by multiplying an output by a predetermined number with respect to the map. The amount of airflow may be changed using a mathematical expression or the like, instead of the map.

Although battery 200 is a sulfide-based all-solid-state battery in the case described in the first embodiment, battery 200 is not limited to the solid-state battery. Battery 200 may be a lithium-ion battery, an LFP battery (iron phosphate lithium-ion battery) having an electrolyte solution, and the like. In the first embodiment, hydrogen sulfide is described as an example of "gas." The "gas" may be other than the hydrogen sulfide. For example, the "gas" may be carbon dioxide, carbon monoxide, hydrogen fluoride, hydrocarbon-based gases and the like, and includes various types of gases generated by combustion in the power storage device. In any case, it is undesirable for a gas harmful to humans to enter vehicle compartment 310.

In the first embodiment, hydrogen sulfide sensor 70 that detects the concentration of hydrogen sulfide is described as an example of "detection device." The "detection device" may detect generation of a gas other than the hydrogen sulfide described above. Alternatively, instead of detecting the generation of the gas, it may be detected that the generation of the gas is predicted.

It may be detected that the generation of the gas is predicted by, for example, a method for detecting a temperature rise in battery 200 through a temperature sensor or the like. When a value of the temperature sensor is higher than a specified value, ECU 150 can predict that the gas will be generated in the future. It may be predicted that the gas will be generated in the future based on a detected value from a pressure sensor, by installing a seal member in battery 200 and providing the pressure sensor adjacent to the seal member. Battery 200 may experience an increase in internal pressure and thus an increase in pressure on the seal member due to breakage. When the detected value from the pressure sensor is higher than a specified value, ECU 150 can predict that the gas will be generated in the future.

It may be detected that the generation of the gas is predicted when a detected value from a strain gauge, a displacement sensor or the like exceeds a specified value. It may be detected that the generation of the gas is predicted using at least one or more of the various sensors that detect the state of battery 200 included in monitoring module 130. It may be detected that the generation of the gas is predicted when a voltage change, a current change or the like in battery 200 falls out of a reference range, or by any method.

The second embodiment describes a process when the operation mode is set to the inside air mode of circulating the air in vehicle compartment 310. As shown in Fig. 7, ECU 150 controls fan 300 in the inside air mode to cause fluid to flow into vehicle compartment 310 at an amount of airflow F1. As shown in Fig. 7, when the rotational speed of fan 300 is as high as amount of airflow F1 exceeding a specified value in the inside air mode, a large amount of air flows into vehicle compartment 310, causing a negative pressure to be generated before fan 300 in an inside air circulation flow path of air conditioning space 320. As a result, a gap may be formed by electromagnetic valve 179 that blocks the outside air, and the generated gas may enter vehicle compartment 310 through the gap formed by electromagnetic valve 179 that blocks the outside air.

As shown in Fig. 8, when hydrogen sulfide sensor 70 detects generation of hydrogen sulfide or detects that the generation of the hydrogen sulfide is predicted in the inside air mode, ECU 150 performs a restriction mode of restricting the amount of airflow from air conditioner 170. The restriction mode is, for example, a mode of controlling air conditioner 170 such that the amount of airflow from air conditioner 170 becomes equal to or lower than a specified value when the amount of airflow from air conditioner 170 exceeds the specified value.

When the amount of airflow from air conditioner 170 is amount of airflow F1 exceeding the specified value, for example, ECU 150 performs the restriction mode of setting the amount of airflow from air conditioner 170 to an amount of airflow F2 equal to or lower than the specified value. By performing the restriction mode, ECU 150 suppresses the generation of a negative pressure before fan 300 in the inside air circulation flow path of air conditioning space 320. As a result, the gap formed between electromagnetic valve 179 that blocks the outside air and the passage can be eliminated.

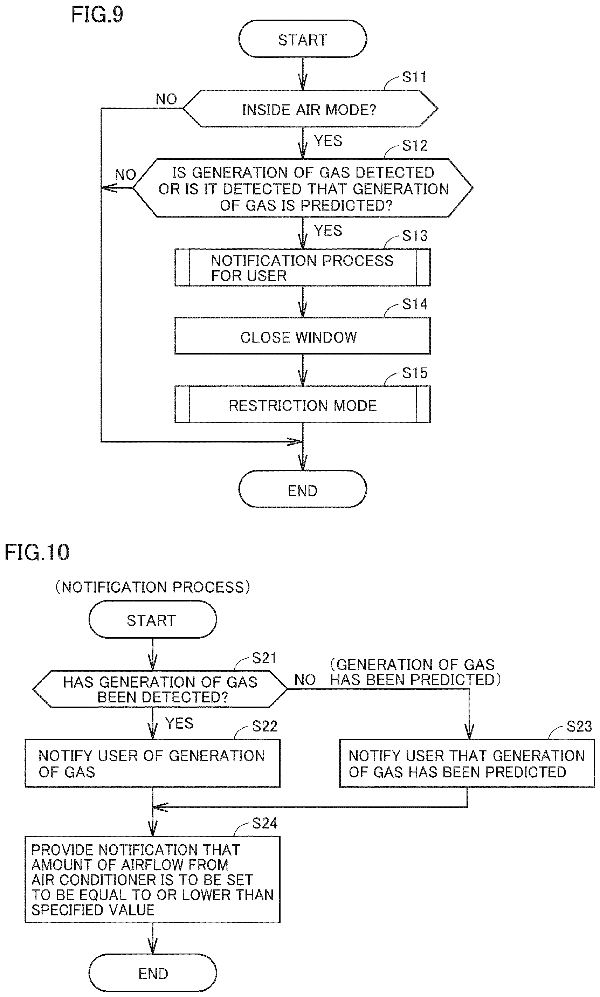

An exemplary process performed by ECU 150 to change amount of airflow F1 to amount of airflow F2 lower than amount of airflow F1 is described. Fig. 9 is a flowchart showing an exemplary process performed by ECU 150.

In S11, ECU 150 determines whether or not a current mode of air conditioner 170 is the inside air mode. When it is determined that the current mode is not the inside air mode in S11 (NO in S11), ECU 150 ends the process. When it is determined that the current mode is the inside air mode in S11 (YES in S11), ECU 150 moves to S12.

In S12, ECU 150 determines, based on a detected value from hydrogen sulfide sensor 70, whether or not generation of a gas has been detected or it has been detected that the generation of the gas is predicted. For example, ECU 150 may detect generation of a gas based on a signal from hydrogen sulfide sensor 70, and may detect that the generation of the gas is predicted based on detected values from the above-described various sensors that detect that the generation of the gas is predicted.

When the generation of the gas has not been detected or it has not been detected that the generation of the gas is predicted (NO in S12), ECU 150 ends the process. When the generation of the gas has been detected or it has been detected that the generation of the gas is predicted in S12 (YES in S12), ECU 150 moves to S13. Note that S13 is a notification process for the user. The notification process will be described in detail with reference to Fig. 10.

Then, ECU 150 performs a step of closing at least one window (S14). Here, when electrically powered vehicle 100 travels in a state in which a gas is generated, the generated gas may flow in through the plurality of windows 180. Specifically, when at least some the plurality of windows 180 are open, the generated gas may enter vehicle compartment 310 through the open portions due to the diffusion effect of air in which the air moves from an area of higher concentration to an area of lower concentration, or due to the influence of a flow or air generated by an increase in speed of electrically powered vehicle 100. Therefore, ECU 150 controls all of the plurality of windows 180 to be closed by outputting a signal for closing windows 180 to the not shown drive unit that drives windows 180.

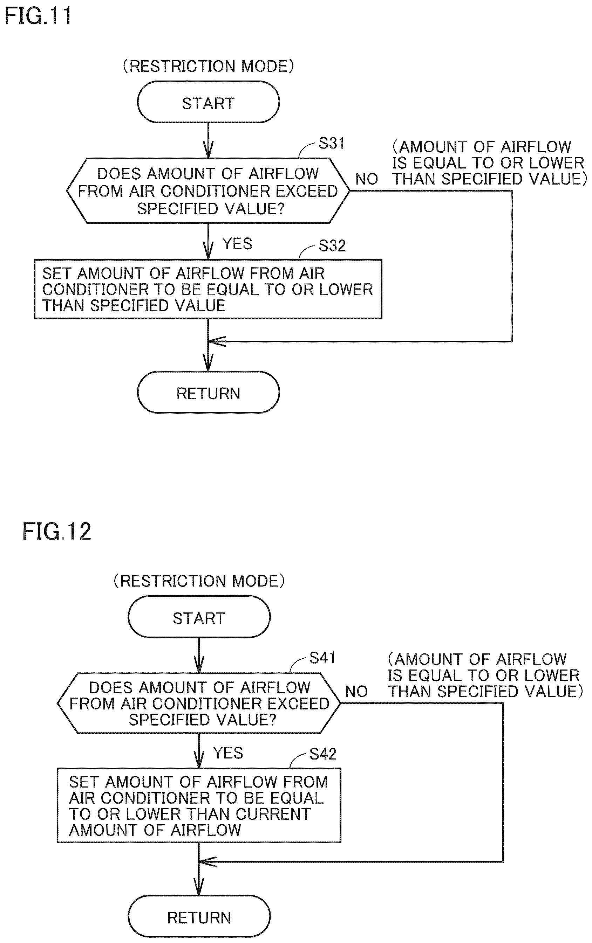

Then, ECU 150 performs a restriction mode (S15), and ends the process. Note that S15 is a process related to a mode of restricting air conditioner 170. The restriction mode will be described in detail with reference to Fig. 11. ECU 150 suppresses the entry of the gas into vehicle compartment 310 by performing the process of Fig. 9. Note that the entry of the gas into vehicle compartment 310 may be suppressed by performing only S15 without performing S13 and S14.

The notification process is described. Fig. 10 is a flowchart showing an exemplary notification process performed by ECU 150. In the notification process, ECU 150 determines whether or not generation of a gas has been detected (S21). When the generation of the gas has been detected in S12, ECU 150 determines that the generation of the gas has been detected.

When the generation of the gas has been detected (YES in S21), ECU 150 notifies the user of electrically powered vehicle 100 of the generation of the gas (S22). For example, ECU 150 causes HMI device 120 of electrically powered vehicle 100 to display a message indicating the generation of the gas. Alternatively, ECU 150 may provide a notification to the user by lighting a lamp, by sound, or the like.

When the generation of the gas has not been detected in S21 (NO in S21), ECU 150 moves to S23. The case where the generation of the gas has not been detected corresponds to the case where it has been detected that the generation of the gas is predicted in S12. When it has been detected that the generation of the gas is predicted (NO in S21), ECU 150 notifies the user of electrically powered vehicle 100 that the generation of the gas has been predicted (S23). For example, ECU 150 causes HMI device 120 of electrically powered vehicle 100 to display a message indicating that the generation of the gas has been predicted. Alternatively, ECU 150 may provide a notification to the user by lighting a lamp, by sound, or the like.

After S22 or S23, ECU 150 provides a notification that the amount of airflow from air conditioner 170 is to be set to be equal to or lower than the specified value (S24), and ends the process. For example, ECU 150 causes HMI device 120 of electrically powered vehicle 100 to display a message indicating that the amount of airflow from air conditioner 170 is to be set to be equal to or lower than the specified value (LOW amount of airflow). Alternatively, ECU 150 may provide a notification to the user by lighting a lamp, by sound, or the like.

Next, the restriction mode is described. Fig. 11 is a flowchart showing an exemplary restriction mode performed by ECU 150. In S31, ECU 150 determines whether or not the amount of airflow from air conditioner 170 exceeds the specified value (the amount of airflow is MEDIUM or HIGH). When the amount of airflow from air conditioner 170 exceeds the specified value (the amount of airflow is MEDIUM or HIGH) (YES in S31), ECU 150 sets the amount of airflow from air conditioner 170 to be equal to or lower than the specified value (LOW amount of airflow) (S32), and the process returns. Note that S32 includes stopping the airflow. When the amount of airflow from air conditioner 170 is equal to or lower than the specified value (LOW amount of airflow) (NO in S31), ECU 150 does not change the amount of airflow from air conditioner 170 and the process returns.

Through the process of S31 and S32, when the generation of the gas has been detected or it has been detected that the generation of the gas is predicted in the inside air mode, and when the amount of airflow from air conditioner 170 exceeds the specified value (the amount of airflow is MEDIUM or HIGH), ECU 150 controls air conditioner 170 such that the amount of airflow from air conditioner 170 becomes equal to or lower than the specified value (LOW amount of airflow). Thus, ECU 150 suppresses the generation of a negative pressure before fan 300 in the inside air circulation flow path of air conditioning space 320. By suppressing the generation of a negative pressure, ECU 150 can eliminate the gap formed by electromagnetic valve 179 that blocks the outside air, to suppress the entry of the gas into vehicle compartment 310.

### (First Modification)

A first modification is different in terms of the control mode. Fig. 12 is a flowchart showing an exemplary restriction mode performed by ECU 150. As shown in Fig. 12, in S41, ECU 150 determines whether or not the amount of airflow from air conditioner 170 exceeds the specified value (the amount of airflow is MEDIUM or HIGH). When the amount of airflow from air conditioner 170 exceeds the specified value (the amount of airflow is MEDIUM or HIGH) (YES in S41), ECU 150 sets the amount of airflow from air conditioner 170 to be equal to or lower than the current amount of airflow (S42), and the process returns. Note that S42 includes stopping the airflow. When the amount of airflow from air conditioner 170 is equal to or lower than the specified value (LOW amount of airflow) (NO in S41), ECU 150 does not change the amount of airflow from air conditioner 170 and the process returns.

Through the process of S41 and S42, when the generation of the gas has been detected or it has been detected that the generation of the gas is predicted in the inside air mode, and when the amount of airflow from air conditioner 170 exceeds the specified value (the amount of airflow is MEDIUM or HIGH), ECU 150 controls air conditioner 170 such that the amount of airflow from air conditioner 170 becomes lower than the current amount of airflow. Thus, ECU 150 suppresses the generation of a negative pressure before fan 300 in the inside air circulation flow path of air conditioning space 320. In S42, since the amount of airflow from air conditioner 170 is set to be lower than the current amount of airflow, it is possible that the amount of airflow still exceeds the specified value (LOW amount of airflow). Nevertheless, ECU 150 can suppress the generation of airflow through S42, and can therefore suppress the entry of the gas into vehicle compartment 310.

Note that ECU 150 may control air conditioner 170 differently depending on whether the generation of the gas has been detected or it has been detected that the generation of the gas is predicted. For example, ECU 150 may set the amount of airflow from air conditioner 170 to be equal to or lower than the specified value when the generation of the gas has been detected, and may set the amount of airflow from air conditioner 170 to be equal to or lower than the current amount of airflow when it has been detected that the generation of the gas is predicted. As described above, when the gas is predicted to be generated, the restriction may be relaxed as compared to when the gas has been certainly generated.

### (Second Modification)

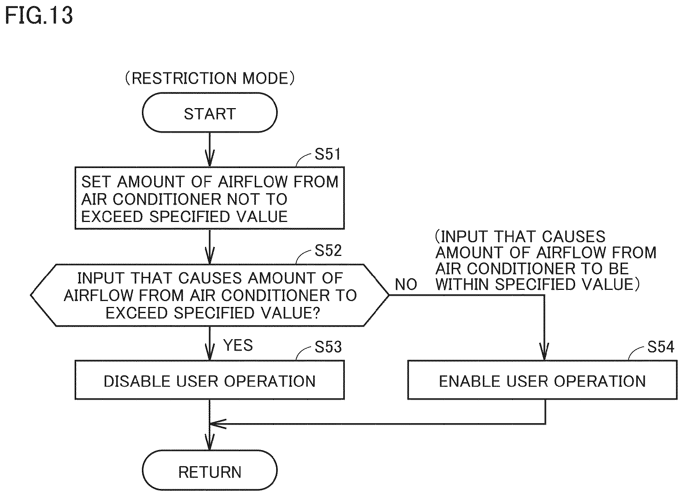

A second modification is different in terms of the control mode. Fig. 13 is a flowchart showing an exemplary restriction mode performed by ECU 150. As shown in Fig. 13, in S51, ECU 150 sets the amount of airflow from air conditioner 170 not to exceed the specified value. The setting of the amount of airflow from air conditioner 170 not to exceed the specified value is, for example, a setting in which air conditioner 170 is controlled such that the amount of airflow from air conditioner 170 does not change to exceed the specified value even when input unit 330 is operated.

Then, ECU 150 determines whether or not an input that causes the amount of airflow from air conditioner 170 to exceed the specified value has been provided to input unit 330 (S52). When it is determined that the input that causes the amount of airflow from air conditioner 170 to exceed the specified value has been provided to input unit 330 (YES in S52), ECU 150 disables an operation by the user (S53), and the process returns. When it is determined that an input that causes the amount of airflow from air conditioner 170 to be within the specified value has been provided to input unit 330 (NO in S52), ECU 150 enables an operation by the user (S54), and the process returns.

Through the process of S51 to S54, ECU 150 controls air conditioner 170 such that the amount of airflow from air conditioner 170 does not exceed the specified value in the inside air mode. Thus, ECU 150 can prevent the amount of airflow from air conditioner 170 from exceeding the specified value, thereby suppressing the generation of a negative pressure. Specifically, in the restriction mode, when an input that causes the amount of airflow from air conditioner 170 to exceed the specified value is provided to input unit 330, ECU 150 can disable an operation by the user, thereby preventing an erroneous operation and the like by the user.

When an input that causes the amount of airflow to be within the specified value is provided, ECU 150 enables an operation by the user, thereby preventing discomfort to the user caused by a stop of the airflow when the outside air temperature is high, for example. To ensure that the entry of the gas into vehicle compartment 310 is prevented, ECU 150 may disable any operation on input unit 330 by the user regardless of whether or not the amount of airflow exceeds the specified value. An operation on input unit 330 by the user that causes the amount of airflow to be within the specified value may be enabled when the gas is predicted to be generated, and may be disabled when the gas has been generated. As described above, when the gas is predicted to be generated, the restriction may be relaxed as compared to when the gas has been certainly generated.

### (Others)

As control that simplifies the embodiments and modifications described above, ECU 150 may perform control of reducing the amount of airflow from air conditioner 170 when a gas is generated from battery module 50 serving a power storage device or when the generation of the gas is predicted in the inside air mode.

Although the embodiments of the present disclosure have been described, it should be understood that the embodiments disclosed herein are illustrative and non-restrictive in every respect. The scope of the present disclosure is defined by the terms of the claims, and is intended to include any modifications within the scope and meaning equivalent to the terms of the claims.

## Claims

1. A vehicle (100) comprising:
a vehicle body;
a power storage device (50) mounted on the vehicle body;
a detection device (70) that detects generation of a gas from the power storage device (50) or detects that the generation of the gas is predicted;
an air conditioner (170) that adjusts an amount of airflow in a vehicle compartment (310), and switches an operation mode between an inside air mode of circulating air in the vehicle compartment (310) and an outside air mode of taking outside air into the vehicle compartment (310); and
a controller (150), wherein
when the detection device (70) detects the generation of the gas or detects that the generation of the gas is predicted in the inside air mode, the controller (150) is configured to perform a restriction mode of restricting an amount of airflow from the air conditioner (170).

2. The vehicle according to claim 1, wherein
in the restriction mode, when the amount of airflow from the air conditioner (170) exceeds a specified value, the controller (150) is configured to control the air conditioner (170) such that the amount of airflow from the air conditioner (170) becomes equal to or lower than the specified value.

3. The vehicle according to claim 1, wherein
in the restriction mode, when the amount of airflow from the air conditioner (170) exceeds a specified value, the controller (150) is configured to control the air conditioner (170) such that the amount of airflow from the air conditioner (170) becomes lower than a current amount of airflow.

4. The vehicle according to claim 1, wherein
in the restriction mode, the controller (150) is configured to control the air conditioner (170) such that the amount of airflow from the air conditioner (170) does not exceed a specified value.

5. The vehicle according to claim 4, further comprising an input unit (330) that is operated by a user to allow the user to adjust the amount of airflow from the air conditioner (170), wherein
in the restriction mode, when an input that causes the amount of airflow from the air conditioner (170) to exceed the specified value is provided to the input unit (330), the controller (150) is configured to disable an operation by the user.

6. The vehicle according to any one of claims 1 to 5, wherein
the air conditioner (170) is configured to switch the operation mode between the inside air mode and the outside air mode by one switching valve (179).

7. A vehicle (100) comprising:
a vehicle body;
a power storage device (50) mounted on the vehicle body;
a detection device (70) that detects generation of a gas from the power storage device (50) or detects that the generation of the gas is predicted;
an air conditioner (170) that adjusts an amount of airflow in a vehicle compartment (310), and switches an operation mode between an inside air mode of circulating air in the vehicle compartment (310) and an outside air mode of taking outside air into the vehicle compartment (310);
a notification device (120) that notifies a user of information about the vehicle (100); and
a controller (150), wherein
when the detection device (70) detects the generation of the gas or detects that the generation of the gas is predicted in the inside air mode, the controller (150) is configured to control the notification device (120) to notify the user that an amount of airflow from the air conditioner (170) is to be set to be equal to or lower than a specified value.

8. A vehicle (100) comprising:
a vehicle body;
a power storage device (50) mounted on the vehicle body;
an air conditioner (170) that adjusts an amount of airflow in a vehicle compartment (310), and switches an operation mode between an inside air mode of circulating air in the vehicle compartment (310) and an outside air mode of taking outside air into the vehicle compartment (310); and
a controller (150), wherein
when a gas is generated from the power storage device (50) or when the generation of the gas is predicted in the inside air mode, the controller (150) is configured to reduce an amount of airflow from the air conditioner (170).

9. A vehicle (100) comprising:
a vehicle body;
a power storage device (50) mounted on the vehicle body;
a detection device (70) that detects generation of a gas from the power storage device (50);
an air conditioner (170) that adjusts an amount of airflow in a vehicle compartment (310), and switches an operation mode between an inside air mode of circulating air in the vehicle compartment (310) and an outside air mode of taking outside air into the vehicle compartment (310); and
a controller (150), wherein
when the detection device (70) detects the generation of the gas, the controller (150) is configured to switch the operation mode to the inside air mode, after setting an amount of airflow from the air conditioner (170) to be equal to or lower than a specified value or after stopping the airflow.

10. The vehicle according to claim 9, wherein
when the detection device (70) detects the generation of the gas, the controller (150) is configured to
determine a current amount of airflow from the air conditioner (170),
set the amount of airflow from the air conditioner (170) to be equal to or lower than the specified value when the determined amount of airflow is higher than the specified value, and
maintain the current amount of airflow when the determined amount of airflow is equal to or lower than the specified value.

11. The vehicle according to claim 9 or 10, further comprising at least one window (180) that is openable and closable and shields an inside of the vehicle compartment (310) from outside air, wherein
the controller (150) is configured to control opening and closing of the at least one window (180), and
when the detection device (70) detects the generation of the gas, the controller (150) is configured to close the at least one window (180).

12. The vehicle according to claim 9 or 10, further comprising a notification device (120) that notifies a user of information about the vehicle (100), wherein
when the detection device (70) detects the generation of the gas, the controller (150) is configured to provide a notification of the generation of the gas by the notification device (120).

13. A control method for controlling a vehicle (100) in which a power storage device (50) is mounted on a vehicle body, wherein
the vehicle (100) includes
a detection device (70) that detects generation of a gas from the power storage device (50), and
an air conditioner (170) that adjusts an amount of airflow in a vehicle compartment (310), and switches an operation mode between an inside air mode of circulating air in the vehicle compartment (310) and an outside air mode of taking outside air into the vehicle compartment (310), and
the control method includes, when the detection device (70) detects the generation of the gas,
setting an amount of airflow from the air conditioner (170) to be equal to or lower than a specified value, or stopping the airflow, and
switching the operation mode to the inside air mode after the setting the amount of airflow or the stopping the airflow.
